Europäisches Patentamt

(19) European Patent Office

Office européen des brevets

(11) Publication number: **0 195 091**

**A2**

(12) # EUROPEAN PATENT APPLICATION

(21) Application number: **85102664.1**

(22) Date of filing: **08.03.85**

(51) Int. Cl.⁴: **G 06 K 15/22**
**G 06 F 3/13**

(43) Date of publication of application:
**24.09.86 Bulletin 86/39**

(84) Designated Contracting States:
**AT CH DE FR GB IT LI SE**

(71) Applicant: **Komori Printing Machinery Co., Ltd.
11-1, Azumabashi 3-chome
Sumida-ku Tokyo(JP)**

(72) Inventor: **Tsunoda, Teruo
2-913-1-C-205, Nishihatsuishi
Nagareyama-shi Chiba(JP)**

(72) Inventor: **Numauchi, Hiromitsu
4173-30, Kimagase Sekiyado-cho
Higashikatsushika-gun Chiba(JP)**

(72) Inventor: **Kurata, Hironobu
719-7, Sanada
Hiratsuka-shi Kanagawa(JP)**

(72) Inventor: **Kawaguchi, Yoichi
1808-7, Yabe-cho Totsuka-ku
Yokohama-shi Kanagawa(JP)**

(72) Inventor: **Ishii, Satoshi
865-3, Kamikurata-cho Totsuka-ku
Yokohama-shi Kanagawa(JP)**

(72) Inventor: **Seki, Masanori
1-31-11, Iwase
Kamakura-shi Kamagawa(JP)**

(72) Inventor: **Iwasaki, Masahiro
3283-15, Kameino
Fujisawa-shi Kanagawa(JP)**

(72) Inventor: **Enomoto, Fukumasa
4-36-7-301, Kounandai Kounan-ku
Yokohama-shi Kanagawa(JP)**

(74) Representative: **Kern, Ralf M., Dipl.-Ing.
Kern, Lang, Barg & Partner Patent- und
Rechtsanwältsbüro Postfach 14 03 29
D-8000 München 5(DE)**

(54) **Method of controlling automatic drawing machine.**

(57) A method of controlling an automatic drawing machine (ADM), for causing a controller (CNT) to receive instruction data from a host computer (HCP) in response to a request code and control the automatic drawing machine (ADM), characterized by: a first step of storing the innstruction data in a buffer memory (BM) through the controller (CNT); and a second step of causing the controller (CNT) to control the automatic drawing machine (ADM) in accordance with the content of the buffer memory (BM).

EP 0 195 091 A2

Specification

Title of the Invention

Method of Controlling Automatic Drawing Machine

Background of the Invention

The present invention relates to a method of controlling an automatic drawing machine for causing a motor to drive a pen head so as to draw a reference line in a press plate.

A reference line, i.e., a so-called register mark is drawn at a reference position to allow easy positioning when a pattern exposure film is placed on a press plate. An automatic drawing machine is used to draw the register mark.

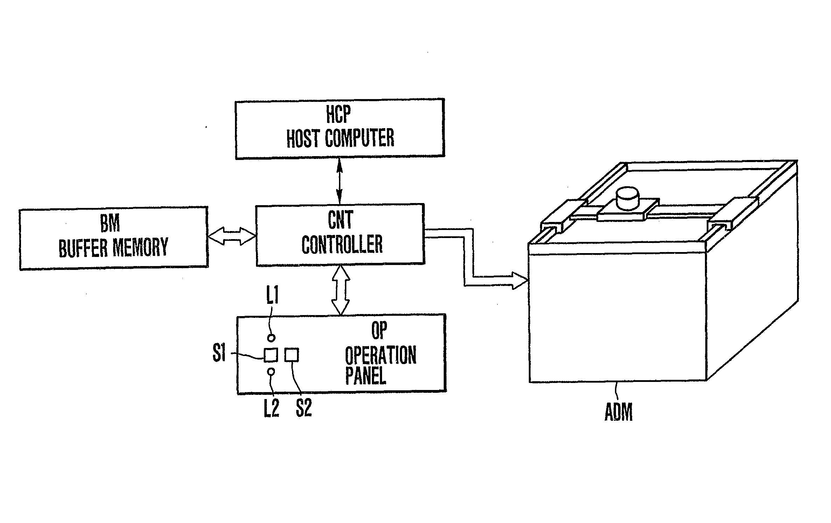

X- and Y-axis motors in the automatic drawing machine are independently driven to draw the reference line. In order to control the drawing state, a controller receives instruction data from a host computer and controls the automatic drawing machine.

However, a conventional controller has only a function for converting the instruction data to a control signal. In this manner, since the host computer always monitors the operation of the automatic drawing machine, the operating efficiency of the host computer is degraded. In particular, when multicolor printing is performed, identical drawing is repeated for every color. As a result, the tendency to inefficiency becomes outstanding.

- 1 -

## Summary of the Invention

It is, therefore, a principal object of the present invention to provide a method of causing a controller to effectively control an automatic drawing machine in accordance with data transferred from a host computer after the controller is off-lined from the host computer.

In order to achieve the above object of the present invention, there is provided a method of controlling an automatic drawing machine, comprising:

a first step of causing a controller to receive instruction data from a host computer in response to a request code;

a second step of storing the instruction data in a buffer memory through the controller; and

a third step of causing the controller to control the automatic drawing machine in accordance with contents of the buffer memory.

## Brief Description of the Drawing

The drawing is a block diagram showing a system configuration of an automatic drawing control system according to an embodiment of the present invention.

## Description of the Preferred Embodiment

The present invention will be described in detail with reference to the accompanying drawing.

Referring to the drawing, a controller CNT having a microprocessor, an internal memory and the like is connected to a host computer HCP. The controller CNT is also connected to a buffer memory BM and an operation panel OP. Upon operation of the operation panel OP, the controller CNT receives instruction data from the host computer HCP. The instruction data is stored in the buffer memory BM through the controller CNT. The controller CNT controls an automatic drawing machine ADM in accordance with the contents of the data stored in the buffer memory BM.

More specifically, when a control switch S1 on the operation panel OP is turned on, an on-line indicator lamp L1 is turned on. At the same time, the controller CNT communicates with the host computer HCP. When the controller CNT sends a request code to the host computer HCP, the host computer HCP sends back the instruction data to the controller CNT. The instruction data is then stored in the buffer memory BM through the controller CNT.

When instruction data storage is completed, the controller CNT is disconnected from the host computer HCP, and at the same time the on-line indicator lamp L1 is turned off. In addition, an off-line indicator lamp L2 is turned on. When a start switch S2 is operated upon operation of the off-line indicator lamp L2, the contents of the buffer memory BM are sequentially read out, and the controller CNT controls the automatic drawing machine ADM in accordance with the readout data.

When identical drawing is performed, the press plate is replaced with a new one and the start switch S2 is turned on, thereby repeating the above-mentioned control.

In this manner, after the instruction data is transferred to the controller CNT, the host computer HCP can perform other data processing. Next instruction data or the like can be prepared, so that the operating efficiency of the host computer HCP is improved. In addition, the controller CNT need not communicate with the host computer HCP every time the controller CNT controls the automatic drawing machine. In particular, when identical drawing is repeated, high-speed control can be provided.

The present invention is not limited to the above embodiment. Various changes and modifications can be made within the spirit and scope of the invention. The switches S1 and S2 and the indicator lamps L1 and L2 can be replaced with elements having the same functions. The controller CNT can be arranged by a combination of various logic circuits. The controller CNT, the operation panel OP and the buffer memory BM can be incorporated in the automatic drawing machine ADM.

As is apparent from the above description, various effects can be obtained when the registered mark drawing machine is controlled. Thus, the operating efficiency of the host computer is improved, and identical drawing can be repeated at high speed.

Claims:

1. · A method of controlling an automatic drawing machine (ADM), for causing a controller (CNT) to receive instruction data from a host computer (HCP) in response to a request code and control said automatic drawing machine (ADM), characterized by comprising:

a first step of storing the instruction data in a buffer memory (BM) through said controller (CNT); and

a second step of causing said controller (CNT) to control said automatic drawing machine (ADM) in accordance with contents of said buffer memory (BM).

2. A method according to claim 1, characterized in that the first step is performed such that an on-line indicator lamp (L1) is turned off and an off-line indicator lamp (L2) is turned on upon an end of instruction data transmission to said buffer memory (BM) from said host computer (HCP).

3. A method according to claim 1, characterized in that the data is read out from said buffer memory (BM) under the control of said controller (CNT) upon depression of a start switch (S2).

1/1